# EUROPÄISCHE PATENTSCHRIFT

(11) **EP 2 856 515 B1**
(45) Veröffentlichungstag und Bekanntmachung des Hinweises auf die Patenterteilung: **18.09.2019**
(21) Anmeldenummer: 13726180.6
(22) Anmeldetag: 28.05.2013
(51) Int. Cl.: H02S 40/34

(54) **ELEKTRISCHE ANSCHLUSS- UND VERBINDUNGSDOSE FÜR EIN SOLARZELLENMODUL**
ELECTRICAL CONNECTION AND JUNCTION BOX FOR A SOLAR CELL MODULE
BOÎTE DE RACCORDEMENT ET DE CONNEXION ÉLECTRIQUE POUR MODULE À CELLULES SOLAIRES

(30) Priorität: 31.05.2012 DE 102012010735
(43) Veröffentlichungstag der Anmeldung: 08.04.2015
(73) Patentinhaber: Kostal Industrie Elektrik GmbH, 58513 Lüdenscheid (DE)
(72) Erfinder: SCHMIDT, Marcel, 58579 Schalksmühle (DE); BUBLIES, Jürgen, 58642 Iserlohn (DE); RUEGGEN, Christian, 44805 Bochum (DE)
(74) Vertreter: Kerkmann, Detlef
(86) Internationale Anmeldenummer: PCT/EP2013/060992
(87) Internationale Veröffentlichungsnummer: WO 2013/178641

(56) Entgegenhaltungen:
- WO-A1-2008/124951
- DE-A1-102007 060 023
- DE-U1-202010 011 496

## Beschreibung

Die Erfindung betrifft eine elektrische Anschluss- und Verbindungsdose für ein Solarzellenmodul mit einem Gehäuse, in dem eine Anschlusseinrichtung zur elektrischen Kontaktierung der Leiterbänder des Solarzellenmoduls mit aus dem Gehäuse herausgeführten Anschlussleitungen aufgenommen ist, wobei die Anschlussleitungen an ihren vom Gehäuse abgewandten Enden jeweils mit einem Steckverbinder versehen sind, und wobei an der Außenseite des Gehäuses jeweils Halteeinrichtungen vorhanden sind, an denen die Steckverbinder lösbar fixierbar sind, wobei die Halteeinrichtungen so ausgebildet sind, dass die in ihnen aufgenommenen Steckverbinder in axialer und radialer Richtung fixiert und um ihre Längsachsen frei drehbeweglich gehalten sind.

Die Anschlusseinrichtung derartiger Anschluss- und Verbindungsdosen für Solarzellenmodule kontaktiert dabei einerseits die üblicherweise als dünne Leiterbänder ausgeführten Anschlussleiter der Solarzellenmodule und andererseits die z.B. zu einem Wechselrichter oder zu weiteren Solarzellenmodulen führenden Anschlussleitungen.

Die Solarzellen in einem Solarzellenmodul sind im Allgemeinen mit dünnen Leiterbändern miteinander verbunden. Diese Leiterbänder weisen typischerweise eine Dicke von wenigen Zehntel Millimetern und eine Breite von einigen Millimetern auf. Diese die einzelnen Solarzellen des Solarzellenmoduls miteinander verbindenden Leiterbänder werden aus dem Solarzellenmodul heraus geführt, so dass die dünnen Leiterbänder direkt zu Anschlusszwecken verwendet werden können.

Zum Anschluss werden die Leiterbänder typischerweise in die elektrische Anschluss- und Verbindungsdose, die einen abnehmbaren Deckel aufweist, von unten her eingeführt, so dass die einzelnen Leiterbänder mit der in dem Gehäuse der Anschluss- und Verbindungsdose vorgesehenen elektrischen Anschlusseinrichtung kontaktiert werden können. Die Anschlusseinrichtung umfasst dabei sogenannte Stromschienen, die als Stanz-Biegeteile aus einem Blechmaterial mit einer guten elektrischen Leitfähigkeit hergestellt sind und zur Verbindung der Potentiale dienen. Zur Kontaktierung der Leiterbänder mit diesen Stromschienen werden beispielsweise Federklemmen oder Schweißverbindungen eingesetzt.

Die aus dem Gehäuse der Anschluss- und Verbindungsdose herausgeführten Anschlussleitungen sind in der Regel als isolierte Rundkabel ausgeführt, die an ihren von dem Gehäuse abgewandten Enden jeweils mit einem Steckverbinder versehen sind. Diese Steckverbinder dienen dazu, das an seinem Bestimmungsort angebrachte Solarzellenmodul etwa mit einem Wechselrichter oder mit weiteren Solarzellenmodulen zu verbinden. Eine typische Anschluss- und Verbindungsdose ist mit zwei Anschlussleitungen versehen, die mit jeweils unterschiedlich codierten Steckverbindern abgeschlossen sind. Durch die unterschiedliche Codierung der Steckverbinder ist eine Verwechslung der Anschlussleitungen und damit eine fehlerhafte Verbindung des Solarzellenmoduls verhindert.

Bei der Handhabung und dem Transport der Anschluss- und Verbindungsdose vor ihrer Montage auf dem Solarzellenmodul oder des Solarzellenmoduls mit der auf diesem montierten Anschluss- und Verbindungsdose sind die losen Anschlussleitungen störend, so dass eine Fixierung derselben vorteilhaft ist.

Aus der DE 10 2007 060 023 A1 ist eine elektrische Anschluss- und Verbindungsdose für ein Solarzellenmodul bekannt geworden, bei der an dem Gehäuse seitlich Halteeinrichtungen angebracht sind, die jeweils zusammengehörige Kabel- und Verbinderhaltebereiche aufweisen, die zur lösbaren Fixierung der Steckverbinder der Anschlussleitungen dienen. Die Verbinderhaltebereiche sind jeweils so ausgebildet, dass sie entsprechend geformte Abschnitte der Steckverbinder formschlüssig aufnehmen. Die Steckverbinder müssen in die Verbinderhaltebereiche in einer im Wesentlichen senkrecht zu ihrer Längsachse verlaufenden Verbinder-Einführrichtung und in einer bestimmten Drehposition gehalten eingeführt werden. In Kooperation mit den zugehörigen Kabelhaltebereichen werden die Steckverbinder in ihren Endlagen praktisch unverrückbar fixiert.

Aus der WO 2008/124951 A1 ist eine elektrische Anschluss- und Verbindungsdose für ein Solarzellenmodul gemäß dem Oberbegriff des Patentanspruchs 1 bekannt geworden.

Die erfindungsgemäße Anschluss- und Verbindungsdose ermöglicht gegenüber dieser eine definiertere und insbesondere axial sicherer fixierte Aufnahme der Steckverbinder der Anschlussleitungen.

Dies wird erfindungsgemäß dadurch erreicht, dass jede Halteeinrichtung angeformte Federarme und diesen gegenüberliegend ein Gegenlager aufweist, die miteinander zur axialen Fixierung des aufgenommenen Steckverbinders kooperieren, indem sich die Federarme neben dem Kabelauslass des Steckverbinders an dessen Gehäuserückseite abstützen, und diesen mit einer in axialer Richtung wirkenden Federkraft gegen das Gegenlager drücken.

In einer bevorzugten Ausführungsform der Erfindung sind die Halteeinrichtungen zur radialen Fixierung der aufgenommenen Steckverbinder jeweils im wesentlichen wannenförmig mit einer zylindrischen Bodenform ausgeführt, an die Fortsätze angeformt sind, durch die im Querschnitt etwa Omega-förmige Klammern gebildet sind.

Eine universelle Nutzung sowie eine Mehrfachnutzung bzw. Wiederverwendung von Teilen der Anschluss- und Verbindungsdose ist dadurch ermöglicht, dass die Halteeinrichtungen als Bestandteile eines Zusatzteils ausgebildet sind, das an dem Gehäuse festlegbar und von diesem auch wieder entfernbar ist, wobei das Zusatzteil vorzugsweise einen die Halteeinrichtungen miteinander verbindenden Steg sowie Verbindungselemente zur Befestigung an dem Gehäuse umfasst.

Nachfolgend ist die Erfindung anhand eines Ausführungsbeispiels unter Bezugnahme auf die beigefügte Zeichnung erläutert.

Dabei zeigen:
- **Fig. 1:**: eine erfindungsgemäße Anschluss- und Verbindungsdose mit Anschlussleitungen und Steckverbindern in einer Gesamtansicht
- **Fig. 2:**: eine Ansicht der Anschluss- und Verbindungsdose und des Zusatzteils mit den Halteeinrichtungen aus Fig. 1 vor ihrem Zusammenbau
- **Fig. 3:**: einen Längsschnitt durch eine der Halteeinrichtungen der Anschluss- und Verbindungsdose aus Fig. 1 beim Einsetzen eines Steckverbinders
- **Fig. 4:**: eine Detailansicht einer der Halteeinrichtungen der Anschluss- und Verbindungsdose aus Fig. 1 ohne und mit eingesetztem Steckverbinder

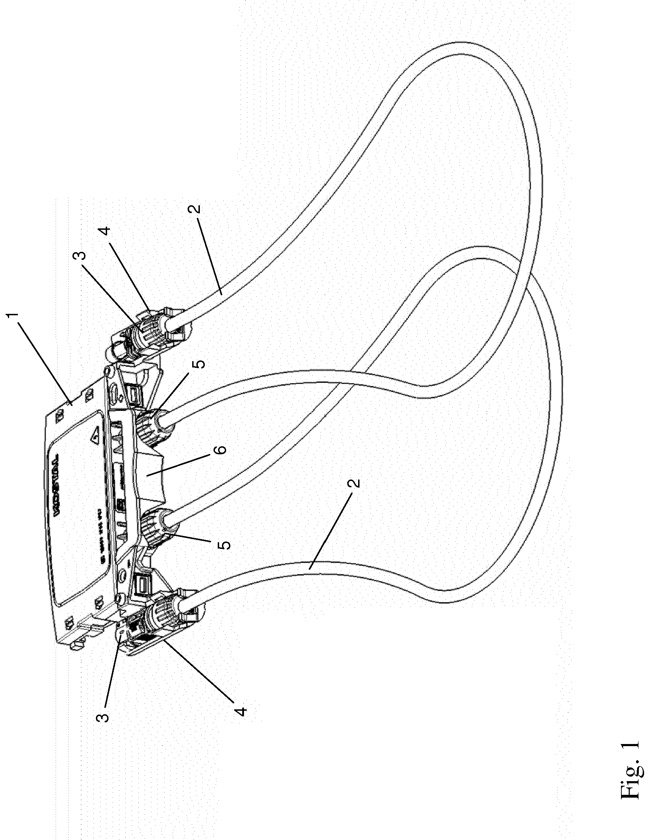

In Fig. 1 ist eine erfindungsgemäße Anschluss- und Verbindungsdose gezeigt. Aus dem Gehäuse 1 der Anschluss- und Verbindungsdose sind an vorderseitig angebrachten Kabelverschraubungen 5 Anschlussleitungen 2 herausgeführt. Die Anschlussleitungen 2 sind als isolierte Rundkabel ausgeführt und an ihren von dem Gehäuse 1 abgewandten Enden jeweils mit einem Steckverbinder 3 versehen. Seitlich an der Außenseite des Gehäuses 1 sind jeweils Halteeinrichtungen 4 für diese Steckverbinder 3 angebracht. Die Halteeinrichtungen 4 dienen dazu, die Steckverbinder 3 für die Handhabung und den Transport der Anschluss- und Verbindungsdose vor ihrer Montage auf dem Solarzellenmodul sowie für die Handhabung und den Transport des Solarzellenmoduls mit der auf diesem montierten Anschluss- und Verbindungsdose lösbar zu fixieren.

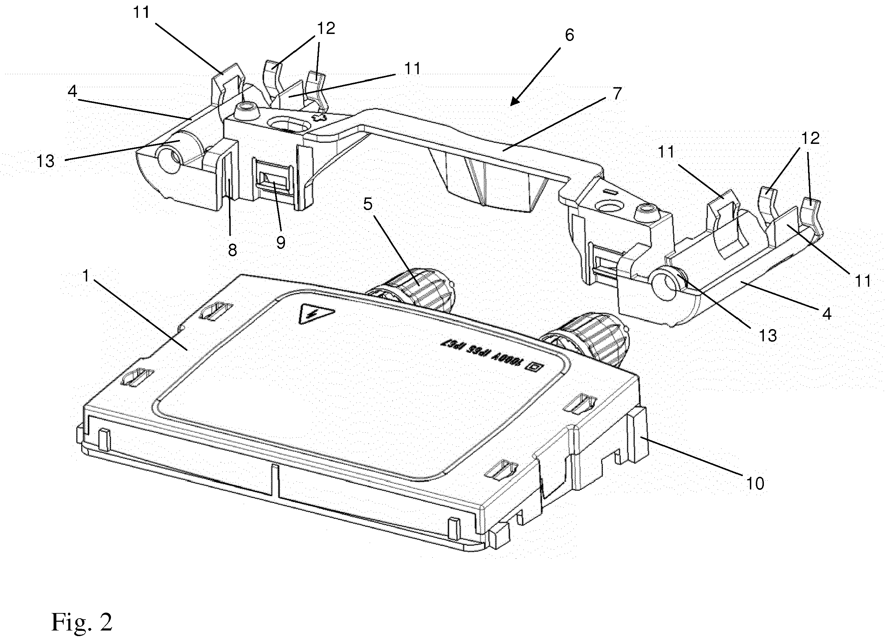

Wie in Fig. 2 zu sehen, sind die Halteeinrichtungen 4 nicht, wie aus dem Stand der Technik bekannt, einstückig mit einem Ober- oder Unterteil des Gehäuses 1 der Anschluss- und Verbindungsdose ausgeführt. Die Halteeinrichtungen 4 sind vielmehr Bestandteile eines Zusatzteils 6, das an dem Gehäuse 1 festlegbar und von diesem auch wieder entfernbar ist. Das Zusatzteil 6 umfasst dabei im wesentlichen die Halteeinrichtungen 4 selbst, einen diese miteinander verbindenden Steg 7 sowie angeformte Verbindungselemente zur Befestigung des Zusatzteils 6 an dem Gehäuse 1 der Anschluss- und Verbindungsdose. In der dargestellten Ausführung sind als Verbindungselemente an dem Zusatzteil Profilführungen 8 und Clipshaken 9 vorgesehen. Beim Zusammenfügen des Zusatzteils 6 mit dem Gehäuse 1 kooperieren die Profilführungen 8 des Zusatzteils 6 mit passenden Profilschienen 10 an dem Gehäuse 1 und in der Endposition rasten die Clipshaken 9 des Zusatzteils 6 an zugeordneten Hinterschnitten des Gehäuses 1 ein, so dass das Zusatzteil 6 an diesem festgelegt ist. Wenn die Halteeinrichtungen 4 für die Steckverbinder 3 nicht mehr benötigt werden, was in der Regel der Fall ist, wenn das Solarzellenmodul fertig montiert und angeschlossen ist, lässt sich das Zusatzteil 6 auch wieder von dem Gehäuse 1 lösen. Dies ermöglicht beispielsweise auch eine Mehrfachnutzung bzw. Wiederverwendung des Zusatzteils 6.

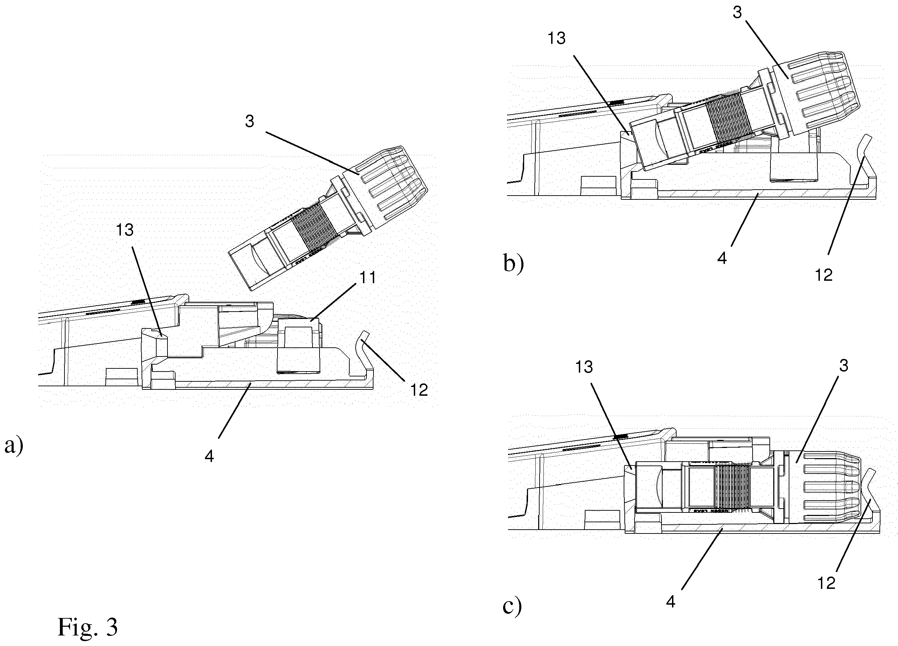

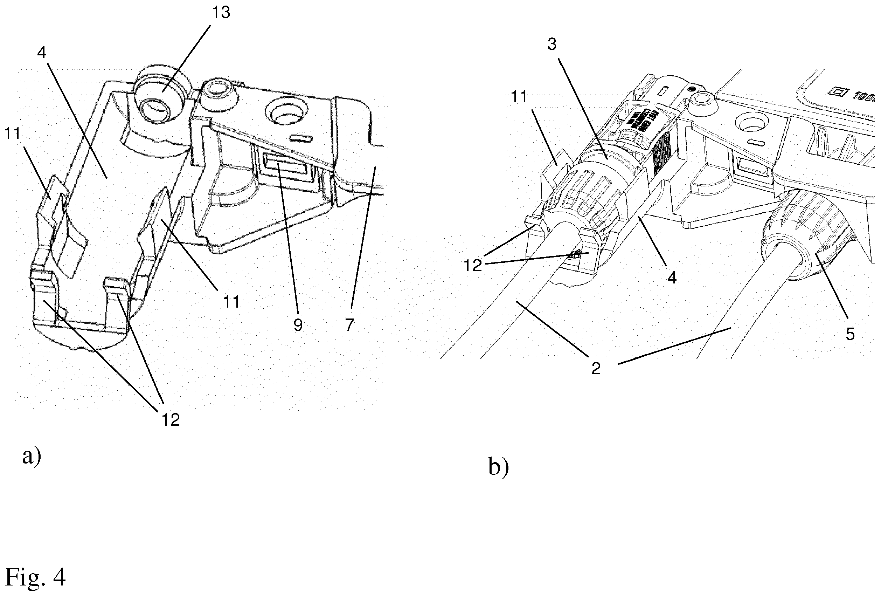

In Fig. 3 ist in einer Schnittdarstellung einer der Halteeinrichtungen 4 der Anschluss- und Verbindungsdose aus Fig. 1 in drei aufeinanderfolgenden Schritten a), b), c) zu sehen, wie das Einsetzen eines Steckverbinders 3 in diese Halteeinrichtung 4 erfolgt, und Fig. 4 a) und b) zeigen eine Detailansicht dieser Halteeinrichtung 4 jeweils ohne und mit eingesetztem Steckverbinder 3. Die Halteeinrichtungen 4 sind im Wesentlichen wannenförmig mit einer zylindrischen Bodenform ausgeführt, in der die Steckverbinder 3 mit ihren ebenfalls zylindrischen Außenkonturen passgenau aufgenommen werden. Auf beiden Seiten dieser Bodenwannen der Halteeinrichtungen 4 sind jeweils nach oben ragende Fortsätze 11 angeformt, die der zylindrischen Kontur der Bodenwanne weiter folgen. Durch diese Fortsätze 11 sind im Querschnitt etwa Omega-förmige Klammern gebildet, die beim Einsetzen des Steckverbinders 3 durch dessen kreisrunde Außenkontur gespreizt werden und diesen in seiner Endlage dann umschließen und somit radial fixiert aber um seine Längsachse frei drehbeweglich halten.

Der in der Halteeinrichtung 4 aufgenommene Steckverbinder 3 wird außerdem durch zwei Federarme 12, die sich neben dem Kabelauslass des Steckverbinders 3 an dessen Gehäuserückseite abstützen, mit einer in axialer Richtung wirkenden Federkraft beaufschlagt. Diese Federkraft drückt den Steckverbinder 3 gegen ein axiales Gegenlager, das durch eine trichterförmige Aufnahme 13 gebildet ist. Die beiden trichterförmigen Aufnahmen 13 der beiden Halteeinrichtungen 4 einer Anschluss- und Verbindungsdose sind jeweils unterschiedlich gestaltet, wie aus den Darstellungen in Fig. 2 zu sehen. Die jeweilige Kontur der Aufnahmen 13 der beiden Halteeinrichtungen 4 ist dabei so gestaltet, dass sie entsprechend der Kontur des Steckgesichts des jeweils in der Halteeinrichtung 4 aufzunehmenden Steckverbinders 3 angepasst ist. Zum Einsetzen des Steckverbinders 3 in die Halteeinrichtung 4 wird der Steckverbinder 3, wie in Fig. 3 am Beispiel einer der beiden Halteeinrichtungen 4 gezeigt, schräg von hinten in diese eingeführt. Beim Herunterdrücken des Steckverbinders 3 in seine Endposition weichen die Federarme 12 nach hinten aus und drücken den Steckverbinder 3 schließlich mit der aus ihrer verbleibenden Auslenkung aus der Ruhelage resultierenden Federkraft nach vorne gegen die trichterförmige Aufnahme 13.

Durch die beschriebene Zusammenwirkung aller Elemente der Halteeinrichtung 4 also insbesondere der Fortsätze 11 mit der Bodenwanne sowie der Federarme 12 mit der trichterförmigen Aufnahme 13 wird erreicht, dass der in der Halteeinrichtung 4 aufgenommene Steckverbinder 3 in axialer und radialer Richtung fixiert und um seine Längsachse frei drehbeweglich gehalten ist.

Durch die Öffnungen der trichterförmigen Aufnahmen 13 sind die elektrischen Kontakte der Steckverbinder 3 von vorne zugänglich, so dass diese z.B. zum Zwecke einer elektrischen Prüfung mit entsprechend ausgebildeten Prüfadaptern elektrisch kontaktiert werden können. Die radiale und axiale Fixierung der Steckverbinder 3 in den Halteeinrichtungen 4 ist für solche Prüfzwecke besonders geeignet. Die freie Drehbeweglichkeit der Steckverbinder 3 in den Halteeinrichtungen 4 ist besonders vorteilhaft im Hinblick auf eine nicht unerhebliche Steifigkeit der Anschlussleitungen 2, die das Einsetzen der Steckverbinder 3 in einer vorbestimmten Drehlage, wie es bei bekannten Einrichtungen erforderlich ist, deutlich erschweren kann.

## Patentansprüche

1. Elektrische Anschluss- und Verbindungsdose für ein Solarzellenmodul mit einem Gehäuse (1), in dem eine Anschlusseinrichtung zur elektrischen Kontaktierung der Leiterbänder des Solarzellenmoduls mit aus dem Gehäuse (1) herausgeführten Anschlussleitungen (2) aufgenommen ist, wobei die Anschlussleitungen (2) an ihren vom Gehäuse (1) abgewandten Enden jeweils mit einem Steckverbinder (3) versehen sind, und wobei an der Außenseite des Gehäuses (1) jeweils Halteeinrichtungen (4) vorhanden sind, an denen die Steckverbinder (3) lösbar fixierbar sind, wobei die Halteeinrichtungen (4) so ausgebildet sind, dass die in ihnen aufgenommenen Steckverbinder (3) in axialer und radialer Richtung fixiert und um ihre Längsachsen frei drehbeweglich gehalten sind, **dadurch gekennzeichnet, dass** jede Halteeinrichtung (4) angeformte Federarme (12) und diesen gegenüberliegend ein Gegenlager aufweist, die miteinander zur axialen Fixierung des aufgenommenen Steckverbinders (3) kooperieren, indem sich die Federarme (12) neben dem Kabelauslass des Steckverbinders (3) an dessen Gehäuserückseite abstützen, und diesen mit einer in axialer Richtung wirkenden Federkraft gegen das Gegenlager drücken.

2. Elektrische Anschluss- und Verbindungsdose nach Anspruch 1, **dadurch gekennzeichnet, dass** jede Halteeinrichtung (4) im wesentlichen wannenförmig mit einer zylindrischen Bodenform ausgeführt ist, an die Fortsätze (11) angeformt sind, durch die im Querschnitt etwa Omega-förmige Klammern gebildet sind.

3. Elektrische Anschluss- und Verbindungsdose nach Anspruch 1 oder 2, **dadurch gekennzeichnet, dass** das Gegenlager durch eine trichterförmige Aufnahme (13) gebildet ist.

4. Elektrische Anschluss- und Verbindungsdose nach einem der Ansprüche 1 bis 3, **dadurch gekennzeichnet, dass** die Halteeinrichtungen (4) als Bestandteile eines Zusatzteils (6) ausgebildet sind, das an dem Gehäuse (1) festlegbar und von diesem auch wieder entfernbar ist.

5. Elektrische Anschluss- und Verbindungsdose nach Anspruch 4, **dadurch gekennzeichnet, dass** das Zusatzteil (6) einen die Halteeinrichtungen (4) miteinander verbindenden Steg (7) sowie Verbindungselemente (8, 9) zur Befestigung des Zusatzteils (6) an dem Gehäuse (1) umfasst.

## Claims

1. Electrical connection and junction box for a photovoltaic cell module, having an enclosure (1) in which a connection facility is accommodated for the electrical contacting of the conduction bands of the photovoltaic cell module to connection cables (2) leading out of the enclosure (1), whereby each of the connection cables (2) is provided with a plug connector (3) on its end facing away from the enclosure (1), and whereby retention devices (4) are provided on the outside of the enclosure (1), to each of which the plug connectors (3) can be detachably fastened, whereby the retention devices (4) are designed in such a manner that the plug connectors (3) accommodated in the same are fixed in the axial and radial direction and are held in a freely rotatable fashion around their longitudinal axes, **characterised in that** each retention device (4) has integral spring arms (12) and a counter-bearing opposite the same which cooperate with each other to provide the axial fastening of the accommodated plug connector (3) **in that** the spring arms (12) are supported, adjacent to the cable outlet of the plug connector (3), on the rear side of its enclosure and press the same against the counter-bearing with a spring force which acts in the axial direction.

2. Electrical connection and junction box according to Claim 1, **characterised in that** each retention device (4) is essentially of a trough-like design with a cylindrical base shape to which the projections (11) are moulded on, by means of which clips of an approximately omega shape clips are formed.

3. Electrical connection and junction box according to Claim 1 or Claim 2, **characterised in that** the counter-bearing is formed by a funnel-like seat (13).

4. Electrical connection and junction box according to any of Claims 1 to 3, **characterised in that** the retention devices (4) are designed as components of an additional part (6) which can be located on the enclosure (1) and removed again from the same.

5. Electrical connection and junction box according to Claim 4, **characterised in that** the additional part (6) incorporates a web (7) connecting the retention devices (4) to each other as well as connection elements (8, 9) for the purpose of fastening the additional part (6) to the enclosure (1).

## Revendications

1. Boîte de raccordement et de jonction électrique pour un module de cellules solaires, avec un boîtier (1), dans lequel est logé un dispositif de raccordement pour la mise en contact électrique des bandes conductrices du module de cellules solaires avec des lignes de raccordement (2) sortant du boîtier (1), sachant que les lignes de raccordement (2) sont pourvues d'un connecteur enfichable (3) à chacune de leurs extrémités orientées à l'opposé du boîtier (1) et sachant que, sur le côté extérieur du boîtier (1), sont respectivement prévues des dispositifs de maintien (4), auxquels les connecteurs enfichables (3) peuvent être fixés de manière amovible, sachant que les dispositifs de maintien (4) sont formés de manière à ce que les connecteurs enfichables (3), qu'ils accueillent, soient maintenus fixement dans la direction axiale et radiale et soient librement mobiles en rotation autour de leurs axes longitudinaux, **caractérisée en ce que** chaque dispositif de maintien (4) présente des bras élastiques (12), formés sur lui, et une contrebutée situé à l'opposé d'eux, lesquels coopèrent ensemble pour la fixation axiale du connecteur enfichable (3) introduit, les bras élastiques (12) s'appuyant, à côté de la sortie de câble du connecteurs enfichable (3), sur le côté arrière de son boîtier, et pressant celui-ci contre la contrebutée avec une force élastique agissant dans la direction axiale.

2. Boîte de raccordement et de jonction électrique selon la revendication 1, **caractérisée en ce que** chaque dispositif de maintien (4) est exécuté essentiellement en forme de cuve à fond de forme cylindrique, sur laquelle sont formés des appendices (11), par lesquels sont réalisées des brides présentant une section transversale de forme oméga.

3. Boîte de raccordement et de jonction électrique selon revendication 1 ou 2, **caractérisée en ce que** la contrebutée est formée par un réceptacle en forme d'entonnoir (13).

4. Boîte de raccordement et de jonction électrique selon l'une des revendications 1 à 3, **caractérisée en ce que** les dispositifs de maintien (4) sont conçus en tant que composants d'une pièce supplémentaire (6), qui peut être fixée sur le boîtier (1) et aussi enlevée de nouveau de celui-ci.

5. Boîte de raccordement et de jonction électrique selon la revendication 4, **caractérisée en ce que** la pièce supplémentaire (6) comprend une patte (7), qui relie les dispositifs de maintien (4) ensemble, ainsi que des éléments de liaison 8, 9) pour la fixation de la pièce supplémentaire (6) sur le boîtier (1).
